# EUROPÄISCHE PATENTANMELDUNG

(11) **EP 0 808 559 A1**
(43) Veröffentlichungstag der Anmeldung: **26.11.1997**
(21) Anmeldenummer: 97105880.5
(22) Anmeldetag: 10.04.1997
(51) Int. Cl.: A01D 80/02

(54) **Anordnung zur Befestigung von Doppelfederzinken an den Tragarmen von Heuerntemaschinen**

(30) Priorität: 21.05.1996 DE 19620251
(71) Anmelder: CLAAS SAULGAU GMBH, D-88340 Saulgau (DE)
(72) Erfinder: Boll, Ulrich, 88348 Saulgau-Bogenweiler (DE); Geng, Manfred, 88348 Saulgau-Bogenweiler (DE)

(57) **Zusammenfassung**

Bei einer Anordnung zur Befestigung von Doppelfederzinken an den Tragarmen (6) von Heuerntemaschinen weist der einzelne Doppelfederzinken zwei Federwendel (2,3) und eine U-förmige Verbindungspartie mit einem Bogen (5) auf. Die Verbindungspartie ist mittels einer Schraube (7) und einer Druckscheibe (9) mit dem Tragarm verspannbar. Um die Winkelstellung des Doppelfederzinkens bezüglich des Tragarms zwischen mehr als zwei vorbestimmten Positionen verändern zu können, ist ein ovaler plättchenförmiger Stützkörper (10) vorgesehen, der zwei parallele Bohrungen aufweist, die insgesamt außermittig bezüglich der Längsachse angeordnet sind und sich vorzugsweise überlappen. Bei Ausnutzung aller Umsetzmöglichkeiten des Stützkörpers können bis zu vier Winkelstellungen ausgewählt werden.

## Beschreibung

Die Erfindung betrifft eine Anordnung zur Befestigung von Doppelfederzinken an den Tragarmen, insbesondere den Armen der Zinkenkreisel, von Heuerntemaschinen nach dem Oberbegriff des Patentanspruchs 1.

Im allgemeinen U-förmige Doppelfederzinken mit zwei Federwendeln werden bei Heuerntemaschinen seit langer Zeit in großem Umfang verwendet. Entsprechend zahlreich sind auch die Patentveröffentlichungen für die Zinkenbefestigung, die meist in der Weise erfolgt, daß die U-förmige Verbindungspartie in der Mitte des Doppelzinkens mittels einer den Tragarm durchsetzenden Schraube mit diesem verspannt wird. Das zeigt zum Beispiel das deutsche Gebrauchsmuster 295 19 638.

Vielfältige Bemühungen haben die Konstrukteure auch darauf gerichtet, die Zinkenbefestigung so zu gestalten, daß die Winkelstellung des Doppelfederzinkens bezüglich der Tragarmachse gewünschtenfalls verändert werden kann. Je nach der speziellen Arbeitsaufgabe (Wenden, Schwaden usw. von Heu) ist es wünschenswert, die Zinken bezüglich der Fahrtrichtung oder Drehrichtung des betreffenden Kreisels ausgehend von der normalen 90°-Stellung gegenüber dem Boden um einige Grad nach vorn oder hinten zu neigen. Ein Beispiel hierfür gibt die europäische Patentschrift 0 097 801. Danach ist eine Stellschraube vorgesehen, die auf den Bogen der U-förmigen Verbindungspartie des Doppelfederzinkens drückt und ihn so daran hindert, sich unter Belastung um den Tragarm zu drehen. Nach einem der Ausführungsbeispiele in der genannten Schrift dient ein keilförmiges Gleitteil mit Langloch zur Abstützung. Es wird mittels der Befestigungsschraube in einer gewählten Stellung festgeklemmt.

Diese stufenlos wirkenden Anordnungen zur Winkeleinstellung haben den Nachteil, daß der Einstellvorgang viel Zeit und Geschick erfordert. Es wird auch nicht immer eine sichere Arretierung des Doppelfederzinkens erreicht, da Gewinde und Keile sich lockern können.

Schließlich ist eine Befestigungs- und Winkelverstellanordnung der Anmelderin bekannt, bei der an einer von der Schraube durchsetzten, auf der U-förmigen Verbindungspartie aufliegenden Klemmscheibe auf einer Seite zwei voneinander diametral abgewandte unterschiedlich lange Nasen angeformt sind. An einer dieser Nasen liegt der Bogen der U-förmigen Verbindungspartie an und stützt sich so in etwa radialer Richtung am Schraubenschaft ab. Die Klemmscheibe läßt sich um 180° drehen, so daß auf diese Weise die jeweils andere Nase zur Wirkung gebracht und der Abstand zur Schraube verändert werden kann. Diese Anordnung ermöglicht zwar eine sichere Arretierung, jedoch gibt es nur zwei mögliche Winkelstellungen.

Der Erfindung liegt die Aufgabe zugrunde, eine einfache Befestigungsanordnung aus kostengünstigen Einzelteilen vorzuschlagen, die eine Auswahl zwischen mehr als zwei fest vorgegebenen Winkelstellungen des Doppelfederzinkens erlaubt, eine sichere Arretierung gewährleistet und einfach zu bedienen ist.

Diese Aufgabe wird ausgehend von einer gattungsgemäßen Befestigungsanordnung nach der Erfindung durch die kennzeichnenden Merkmale des Patentanspruchs 1 gelöst. Dabei wird von einem Doppelfederzinken Gebrauch gemacht, der so geformt und angeordnet ist, daß die Schraube in einem Abstand vom Bogen zwischen den Schenkeln der U-förmigen Verbindungspartie hindurchgeht und die Schenkel einerseits unmittelbar am Tragarm und andererseits an einer Druckscheibe oder einem breiten Kopf der Schraube anliegen. Dabei bleibt der Innenraum der U-förmigen Partie um den Schraubenschaft herum frei. In diesen Raum wird nach dem Grundgedanken der Erfindung ein ovaler plattenartiger Stützkörper eingesetzt, der den Raum im wesentlichen ausfüllt, indem seine Breite dem Abstand der Schenkel entspricht und die beidseitigen Rundungen in den Verbindungsbogen passen. Mehrfach umsetzbar ist dieser Stützkörper insofern, als er nach dem Lösen der Schraube einerseits um 180° bezüglich der Schraubenachse gedreht und andererseits wahlweise mit der einen oder anderen Bohrung über die Schraube gesteckt werden kann. Dadurch ergeben sich unterschiedliche Abstände zwischen der Schraube und dem Verbindungsbogen.

Vorzugsweise hat der Stützkörper zwei parallele Bohrungen, die in der Längsachse des Ovals liegen und sich zweckmäßigerweise überlappen. Es muß nur gewährleistet sein, daß der Schraubenschaft sicher in seiner Bohrung gehalten wird. Beide Bohrungen insgesamt sind bezogen auf die Länge des Ovals außermittig angeordnet. Die Dicke des Stützkörpers ist vorzugsweise geringer als der Durchmesser des Zinkenquerprofils, so daß durch die Anwesenheit des radial wirkenden Stützkörpers die in Schraubenachsrichtung gehende Klemmwirkung auf die U-förmige Verbindungspartie nicht beeinträchtigt wird.

Bei einer bevorzugten Ausführungsform der Erfindung werden von den möglichen vier Stellungen nur drei verwendet, wobei die Stellungsunterschiede gleich groß sind. Man erreicht dies dadurch, daß die Exzentrizität der Bohrungsanordnung gleich 1/4 des Bohrungsachsabstandes ist.

Der Stützkörper ist ein außerordentlich einfaches Stanzteil. Neben der Schraube sind dann noch eine, wie erwähnt flache, Druckscheibe und im Falle eines runden Tragarms eine Formscheibe erforderliche, die auf der einen Seite flach und auf der anderen Seite der Wölbung des Tragarms angepaßt ist. Somit ist die vorgeschlagene Anordnung außerordentlich kostengünstig. Das Umdrehen bzw. Umsetzen des Stützkörpers ist schnell erledigt und bedarf keines besonderen Geschicks. Jeder Position ist eine bestimmte Winkelstellung des Druckfederzinkens fest zugeordnet, die auch bei hohen Belastungen erhalten bleibt.

Ein Ausführungsbeispiel der Erfindung wird nachfolgend anhand der Zeichnung erläutert. Im einzelnen zeigt
- Fig. 1: die Ansicht einer Befestigungsanordnung in Tragarmlängsrichtung in "Null"-Stellung,
- Fig. 2: die Draufsicht der Fig. 1 entsprechenden Anordnung, wobei der Tragarm aufgebrochen und die Schraube geschnitten ist,
- Fig. 3: die Anordnung nach Fig. 1 in der "Vorlauf"-Stellung,
- Fig. 4: die Draufsicht nach Fig. 3,
- Fig. 5: die Anordnung nach Fig. 1 in der "Nachlauf"-Stellung,
- Fig. 6: die Draufsicht nach Fig. 5 und
- Fig. 7: eine vergrößerte Draufsicht des verwendeten Stützkörpers.

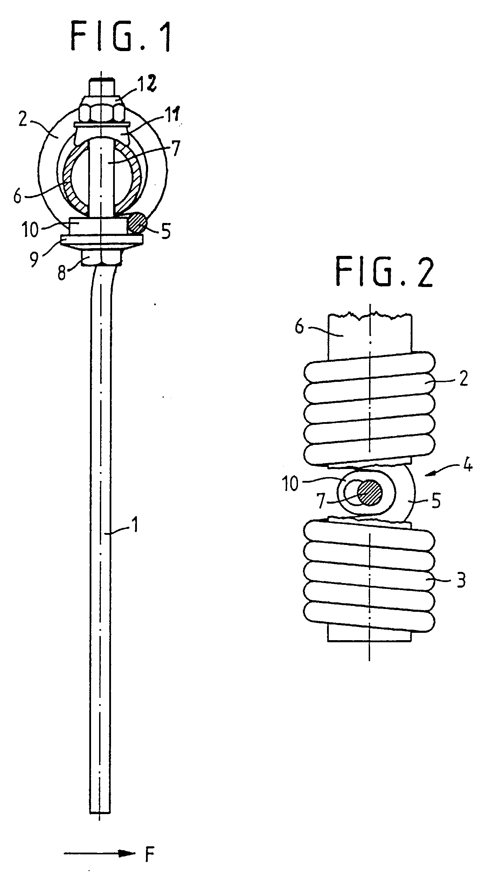

Die Figuren 1 und 2 zeigen einen Doppelfederzinken aus Rundmaterial. Die Zinkenspitzen sind mit 1, die Federwendel mit 2 und 3 bezeichnet. Eine U-förmige Verbindungspartie 4 verbindet die beiden Federwendel 2 und 3 miteinander. Die Verbindungspartie besteht aus einem Verbindungsbogen 5 und zwei nur andeutungsweise erkennbaren Schenkeln, die gleichzeitig die einander gegenüberliegenden Endpartien der Federwendel 2 und 3 bilden. Ein Tragarm 6 ist als Rohr ausgebildet und durchsetzt die beiden Federwendel. Der Tragarm 6 hat eine Querbohrung, durch welche der Schaft 7 einer Schraube von unten nach oben durchgesteckt ist. An den Kopf 8 der Schraube schließt sich eine runde flache Druckscheibe 9 an, die auf der U-förmigen Verbindungspartie 4 aufliegt. Auf die Druckscheibe 9 folgt ein flacher, als Oval gestanzter Stützkörper 10. Er fügt sich in die U-förmige Verbindungspartie 4 ein und ist deutlich dünner als diese bzw. als der Durchmesser des Rundstahls, aus dem der Doppelfederzinken gefertigt ist. Auf der gegenüberliegenden Seite des Tragarms 6 ist eine Formscheibe 11 auf die Schraube gesteckt und schließlich eine Mutter 12 aufgeschraubt.

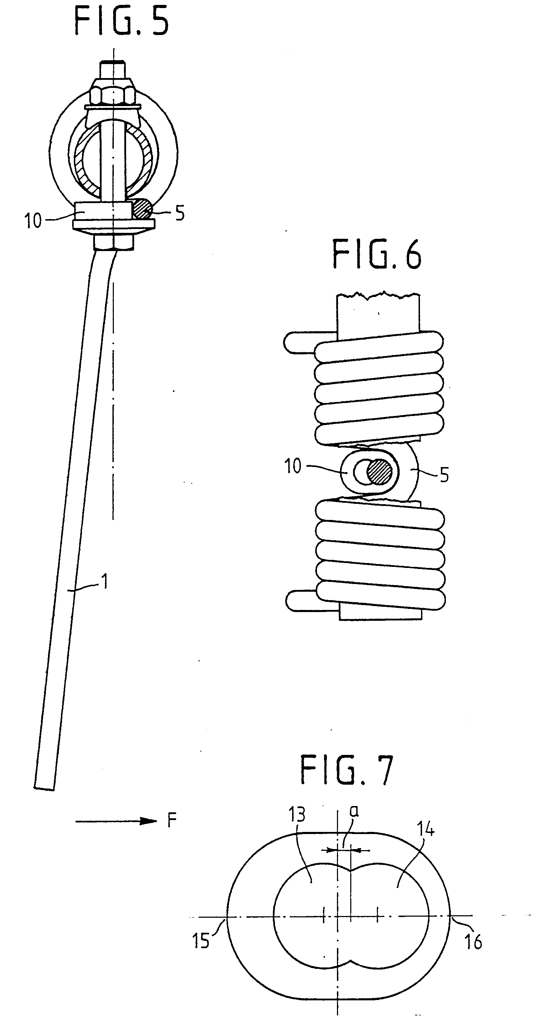

Wie Fig. 7 deutlicher zeigt, hat der Stützkörper 10 zwei Bohrungen 13 und 14, die auf der Längsachse liegen und sich gegenseitig überlappen. Hinsichtlich ihres Durchmessers sind die Bohrungen ziemlich genau auf den Schaftdurchmesser der Schraube abgestimmt. Die Mitte des Bohrungsachsabstandes ist gegenüber der Längsmitte des Stützkörpers 10 um einen Abstand a verschoben, der gleich dem vierten Teil des Bohrungsachsabstandes ist. Somit ist der Abstand zwischen dem Zentrum der Bohrung 13 und dem Scheitelpunkt 15 um die Strecke 2a größer als der Abstand zwischen dem Zentrum der Bohrung 14 und dem Scheitelpunkt 16.

Gemäß Fig. 2 befindet sich der Schaft 7 in der Bohrung 13 und der Verbindungsbogen stützt sich am Scheitelpunkt 15 ab. Dies ist die "Null"-Stellung was bedeutet, daß die Zinkenspitze 1 bei Bodenberührung etwa senkrecht zur Bodenoberfläche steht.

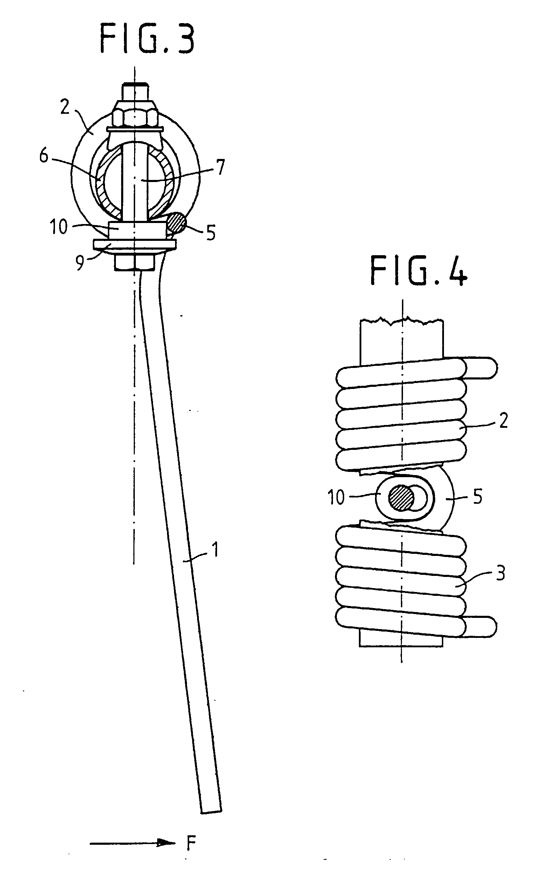

Die Figuren 3 und 4 zeigenden Stützkörper 10 um 180° gedreht. Der Schaft 7 befindet sich immer noch in der Bohrung 13. Der wirksame Stützpunkt ist jetzt der Scheitelpunkt 16. Dementsprechend ist der Abstand des Verbindungsbogens vom Schraubenschaft um die Strecke 2a größer und die Zinkenspitze hat bezüglich der Fahrt- bzw. Bewegungsrichtung F des Tragarms einen "Vorlauf" von etwa 7° bezüglich der Schraubenachse.

Nach den Figuren 5 und 6 ist der Stützkörper 10 ohne Drehung bezüglich der Stellung in Fig. 4 mit seiner Bohrung 14 auf den Schaft 7 aufgesteckt. Das bedeutet gegenüber der "Vorlauf"-Stellung eine Verringerung des Stützabstandes um die Strecke 4a. Somit erhält man die "Nachlauf"-Stellung mit ebenfalls 7° bezüglich der Schraubenachse.
- 1: Zinkenspitze
- 2: Federwendel
- 3: Federwendel
- 4: Verbindungspartie
- 5: Verbindungsbogen
- 6: Tragarm
- 7: Schaft
- 8: Kopf
- 9: Druckscheibe
- 10: Stützkörper
- 11: Formscheibe
- 12: Mutter
- 13: Bohrung
- 14: Bohrung
- 15: Scheitelpunkt
- 16: Scheitelpunkt
- a: 1/4 des Bohrungsachsabstandes
- F: Fahrt- bzw. Bewegungsrichtung

## Patentansprüche

1. Anordnung zur Befestigung von Doppelfederzinken an den Tragarmen von Heuerntemaschinen, wobei der einzelne Doppelfederzinken zwei Federwendel und eine U-förmige Verbindungspartie aufweist, die mittels einer den Tragarm quer durchsetzenden Schraube mit diesem verspannbar ist, und mit Mitteln zur wahlweisen Veränderung der Winkelstellung des Doppelfederzinkens bezüglich der Tragarmachse, dadurch gekennzeichnet, daß ein in die U-förmige Verbindungspartie (4) einlegbarer und in mehr als zwei festgelegte Positionen bezüglich der Schraubenachse umsetzbarer Stützkörper (10) vorgesehen ist, der den Bogen (5) der U-förmigen Verbindungspartie (4) am Schraubenschaft (7) abstützt.

2. Befestigungsanordnung nach Anspruch 1, dadurch gekennzeichnet, daß der Stützkörper (10) ein ovales Plättchen ist, das zwei parallele Bohrungen (13, 14) zur passenden Aufnahme des Schraubenschafts (7) aufweist, die in der Längsachse des Stützkörpers außermittig angeordnet sind.

3. Befestigungsanordnung nach Anspruch 2, dadurch gekennzeichnet, daß die Bohrungen (13, 14) einander überlappen.

4. Befestigungsanordnung nach Anspruch 2, dadurch gekennzeichnet, daß die Dicke des Stützkörpers (10) geringer als der Durchmesser des Zinkenprofils ist.

5. Befestigungsanordnung nach Anspruch 2, dadurch gekennzeichnet, daß die Exzentrizität (a) der Bohrungsanordnung gleich 1/4 des Bohrungsachsabstandes ist.
